(19) Europäisches Patentamt
European Patent Office
Office européen des brevets

(11) **EP 4 333 259 B1**

(12) **EUROPEAN PATENT SPECIFICATION**

(45) Date of publication and mention
of the grant of the patent:
**09.07.2025  Bulletin 2025/28**

(21) Application number: **21938349.4**

(22) Date of filing: **29.04.2021**

(51) International Patent Classification (IPC):
*H02J 13/00* (2006.01)     *B60L 53/64* (2019.01)

(52) Cooperative Patent Classification (CPC):
**H02J 7/00032; B60L 53/62; B60L 53/63;
B60L 53/64; B60L 53/67; B60L 53/68;
H02J 7/0013; H02J 7/00712; H02J 13/00032;**
H02J 2310/48; H02J 2310/52; H02J 2310/60;
Y02T 10/70; Y02T 90/12

(86) International application number:
**PCT/CN2021/090869**

(87) International publication number:
**WO 2022/226866 (03.11.2022 Gazette 2022/44)**

(54) **POWER CONTROL METHOD FOR CHARGING STATION, POWER CONTROL APPARATUS, AND SYSTEM**

LEISTUNGSSTEUERUNGSVERFAHREN FÜR EINE LADESTATION, LEISTUNGSSTEUERUNGSVORRICHTUNG UND SYSTEM

PROCÉDÉ DE COMMANDE DE PUISSANCE POUR STATION DE CHARGE, APPAREIL DE COMMANDE DE PUISSANCE ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.03.2024  Bulletin 2024/10**

(73) Proprietors:
• **Zhejiang Geely Holding Group Co., Ltd**
**Hangzhou City, Zhejiang 310051 (CN)**
• **Geely Automobile Research Institute
(Ningbo) Co., Ltd.
Ningbo City, Zhejiang 315336 (CN)**

(72) Inventors:
• **GUO, Shuibao**
**Hangzhou, Zhejiang 310051 (CN)**
• **ZHANG, Ruifeng**
**Hangzhou, Zhejiang 310051 (CN)**
• **JIANG, Daiping**
**Hangzhou, Zhejiang 310051 (CN)**
• **ZHAO, Yue**
**Hangzhou, Zhejiang 310051 (CN)**

• **YANG, Xianming**
**Hangzhou, Zhejiang 310051 (CN)**
• **ZHAO, Yangbo**
**Hangzhou, Zhejiang 310051 (CN)**
• **YAN, Yan**
**Hangzhou, Zhejiang 310051 (CN)**

(74) Representative: **Kraus & Lederer PartGmbB
Thomas-Wimmer-Ring 15
80539 München (DE)**

(56) References cited:
WO-A1-2019/153305     CA-A1- 3 097 580
CN-A- 103 679 302     CN-A- 107 528 385
US-A1- 2013 009 599     US-A1- 2013 113 282
US-A1- 2018 262 019     US-A1- 2019 168 630

• ZHU YONGSHENG, YANG LU;XIAO JUNMING;DONG YAN;FAN LIBO;FENG CHAO;WAN YANING: "Optimal dispatch of supply and demand interaction in active distribution network based on consumer psychology", ZHONGYUAN-GONGXUEYUAN-XUEBAO = JOURNAL OF ZHONGYUAN UNIVERSITY OF TECHNOLOGY, ZHENGZHOU : GONGXUEYUAN, CN, vol. 32, no. 1, 28 February 2021 (2021-02-28), CN
, pages 29 - 34, XP055982841, ISSN: 1671-6906, DOI: 10.3969/j.issn.1671-6906.2021.01.006

**Description**

**FIELD**

The present disclosure relates to the field of charging station control, and in particular, to a power control method for a charging station and a power control apparatus and system of a charging station.

**BACKGROUND**

Currently, with the popularization of electric vehicles, there is a growing number of charging stations. During construction of these charging stations, a charging station having an energy storage unit is gradually derived for the purposes of avoiding excessive impact on a power grid, achieving cooperative use of various electric energy sources, and the like.

In the related art, research has been conducted on a control method of an energy storage system. For example, a power supply plan for the power grid and the energy storage system is decided by designing a scheduling algorithm, which focuses on solving a problem of cooperative scheduling among different electric energy. One example is US 2013/009599.

However, in diverse current studies, it is not considered that in some scheduling scenarios, the power grid or the energy storage system causes a sudden drop in an output capability due to a predetermined reason, such as a fault, and a load (i.e., a charger) may not perform power derating in time, resulting in a risk of power grid overload. For the charging station, considering both economic factors and a current state of a regional power grid, a power supply capability of the power grid often may not satisfy the requirements for full power output of all the charging devices simultaneously. In such cases, compared with reasonably scheduling different energy sources, it is more important to ensure that the power grid overload is avoided when the charging device operates.

**SUMMARY**

In view of the above problems, the present disclosure is proposed to overcome the above problems or at least partially solve the above problems. To this end, the present disclosure provides a power control method for a charging station, a power control apparatus and system of a charging station.

An embodiment of a first aspect of the present disclosure is to provide a power control method for a charging station, applied to an integrated controller of the charging station, which may effectively avoid power grid overload.

Another embodiment of the present disclosure is to improve a response speed of power grid overload protection, to better prevent the power grid overload.

An embodiment of a second aspect of the present disclosure is to provide a power control method for a charging station, applied in each target charging device of the charging station, which may effectively avoid the power grid overload.

An embodiment of a third aspect of the present disclosure is to provide a power control apparatus of a charging station, applied in an integrated controller of the charging station, which may efficaciously protect the power grid.

An embodiment of a fourth aspect of the present disclosure is to provide a power control apparatus of a charging station, applied in each target charging device of the charging station, which may effectually protect the power grid.

An embodiment of a fifth aspect of the present disclosure is to provide a power control system of a charging station, including the power control apparatus applied in each target charging device of the charging station and the power control apparatus applied in the integrated controller of the charging station, which may availably protect the power grid.

In particular, according to a first aspect of embodiments of the present disclosure, provided is a power control method for a charging station, applied to an integrated controller of the charging station, where the charging station has an energy storage system and is connected to a power grid system, the power control method including: acquiring a power supply capability parameter broadcasted by the energy storage system, a power supply capability parameter broadcasted by the power grid system, and a current power demand broadcasted by each target charging device, the target charging device is a charging device having a power output demand in the charging station; calculating a first maximum available power of the charging station based on the power supply capability parameter of the energy storage system and the power supply capability parameter of the power grid system; determining a first power limit of each target charging device based on the first maximum available power of the charging station, the current power demand broadcasted by each target charging device, and a predetermined allocation rule; and broadcasting the first maximum available power of the charging station and the first power limit of each target charging device to each target charging device, so that each target charging device performs power output based on the first power limit, determines whether a sudden drop in a power supply capability occurs based on the received first maximum available power of the charging station, a currently acquired power supply capability parameter broadcasted by the energy storage system, and a currently acquired power supply capability parameter broadcasted by the power grid system, and reduces a power limit of the target charging device to a second power limit when the sudden drop in the power supply capability occurs, to avoid power grid overload of the charging station. The first maximum available power is calculated by a formula: APmax=GPmax+EPmax-RP, wherein APmax represents the first maximum available power, GPmax represents a maximum available power of the power grid system, EPmax represents a maximum available power of the energy storage system, and RP represents a predetermined reserved power; or the first maximum available power is calculated by a formula: APmax=Pc*(GPmax+EPmax), wherein APmax represents the first maximum available power, GPmax represents a maximum available power of the power grid system, EPmax represents a maximum available power of the energy storage system, and Pc represents a power coefficient, where $0<Pc\leq1$.

Exemplarily, the power control method further includes, subsequent to broadcasting the first maximum available power of the charging station and the first power limit of each target charging device to each target charging device: re-determining the first power limit of each target charging device based on a currently calculated first maximum available power of the charging station, the current power demand broadcasted by each target charging device, and the predetermined allocation rule; and broadcasting the currently calculated first maximum available power and the re-determined first power limit of each target charging device to each target charging device, so that each target charging device determines whether the first power limit is recalculated based on the received first maximum available power of the charging station, the currently acquired power supply capability parameter broadcasted by the energy storage system, and the currently acquired power supply capability parameter broadcasted by the power grid system, and cancels reduction of the power limit of the each target charging device and performs the power output based on the first power limit when the first power limit has been recalculated.

Exemplarily, the determining the first power limit of each target charging device based on the first maximum available power of the charging station, the current power demand broadcasted by each target charging device, and the predetermined allocation rule includes: calculating a maximum request power based on a current required power broadcasted by each target charging device; and determining the current required power of each target charging device as the first power limit when the first maximum available power is greater than or equal to the maximum request power.

Exemplarily, the power control method further includes, subsequent to the calculating the maximum request power based on the current demand power broadcasted by each target charging device: determining the first power limit based on a power priority level of each target charging device and the current required power when the first maximum available power is smaller than the maximum request power, to ensure that the first maximum available power is greater than or equal to a sum of first power limits of the target charging devices.

In particular, according to a second aspect of the embodiments of the present disclosure, further provided is a power control method for a charging station, applied in each target charging device of the charging station, where the target charging device is a charging device having a power output demand in the charging station, the charging station has an energy storage system and is connected to a power grid system, the power control method including: broadcasting a current power demand of each target charging device; receiving a first maximum available power of the charging station broadcasted by an integrated controller of the charging station and a first power limit of each target charging device, and performing power output based on the first power limit, the first maximum available power of the charging station and the first power limit of each target charging device are calculated and determined by the integrated controller based on an acquired power supply capability parameter broadcasted by the energy storage system, an acquired power supply capability parameter broadcasted by the power grid system, the current power demand broadcasted by each target charging device, and a predetermined allocation rule; acquiring a current power supply capability parameter broadcasted by the energy storage system and a current power supply capability parameter broadcasted by the power grid system in real time, and determining whether a sudden drop in a power supply capability occurs based on the first maximum available power of the charging station and the currently acquired power supply capability parameter broadcasted by the energy storage system and the currently acquired power supply capability parameter broadcasted by the power grid system; and reducing the power limit of each target charging device to a second power limit when the sudden drop in the power supply capability occurs, to avoid power grid overload of the charging station.

Exemplarily, the determining whether the sudden drop in the power supply capability occurs based on the first maximum available power of the charging station, the currently acquired power supply capability parameter broadcasted by the energy storage system, and the currently acquired power supply capability parameter broadcasted by the power grid system includes: calculating a second maximum available power of the charging station based on the currently acquired power supply capability parameter broadcasted by the energy storage system and the currently acquired power supply capability parameter broadcasted by the power grid system; and determining that the sudden drop in the power supply capability occurs when the second maximum available power is smaller than the first maximum available power.

Exemplarily, the power control method further includes, subsequent to reducing the power limit of each target charging device to the second power limit: calculating a latest second maximum available power of the charging station based on a latest acquired power supply capability parameter broadcasted by the energy storage system and a latest acquired power supply capability parameter broadcasted by the power grid system, and receiving a latest first maximum available power of the charging station broadcasted by the integrated controller of the charging station and a latest first power limit of each target charging device; and performing the power output based on the latest received first power limit corresponding to each target charging device when the latest broadcasted first maximum available power is smaller than or equal to the latest second maximum available power.

Exemplarily, the second maximum available power is calculated as SPmax=GPmax+EPmax-RP, where SPmax represents the second maximum available power of the charging station, GPmax represents a maximum available power of the power grid system, EPmax represents a maximum available power of the energy storage system, and RP represents a predetermined reserved power.

Exemplarily, the second maximum available power is calculated as SPmax=Pc*(GPmax+EPmax), where SPmax represents the second maximum available power of the charging station, GPmax represents a maximum available power of the power grid system, EPmax represents a maximum available power of the energy storage system, and Pc represents a power coefficient, where 0<Pc≤1.

Exemplarily, the second power limit is equal to a difference between the first maximum available power and the second maximum available power.

In particular, according to a third aspect of the embodiments of the present disclosure, provided is a power control apparatus of a charging station, applied in an integrated controller of the charging station. The power control apparatus includes: a memory having a control program stored therein; and a processor. The control program is configured to, when executed by the processor, implement the power control method applied to the integrated controller of the charging station according to any one of the above embodiments.

In particular, according to a fourth aspect of the embodiments of the present disclosure, provided is a power control apparatus of a charging station, applied in each target charging device of the charging station. The power control apparatus includes: a memory having a control program stored therein; and a processor. The control program is configured to, when executed by the processor, implement the power control method applied in each target charging device of the charging station according to any one of the above embodiments.

In particular, according to a fifth aspect of the embodiments of the present disclosure, provided is a power control system of a charging station, including the power control apparatus applied in each target charging device of the charging station and the power control apparatus applied in the integrated controller of the charging station.

In the present disclosure, the first maximum available power is calculated by means of the integrated controller of the charging station. Then, each target charging device determines whether the sudden drop in the power supply capability occurs based on the received first maximum available power, and the power supply capability parameter broadcasted by the energy storage system and the power supply capability parameter broadcasted by the power grid system which are currently acquired by the target charging device. Once it is determined that the sudden drop in the power supply capability occurs, the power limit of the target charging device is reduced to the second power limit, to ensure that electric powers of all the current target charging devices do not exceed the power supply capability of the charging station, so as to protect the power grid from existing overload operating conditions.

Further, in the present disclosure, when a predetermined target charging device determines that the sudden drop in the power supply capability occurs, the target charging device immediately controls a power of the predetermined target charging device to perform derating, which may achieve an effect of proactive and timely response and prevents the power grid from having the overload operating condition. This method is simple to calculate, with a fast response speed, and may better protect the power grid.

The above description is merely an overview of the technical solutions of the present disclosure. In order to more clearly understand the technical means of the present disclosure, the technical solutions to implement them based on the disclosure of the description and to clarify and explain the above and other embodiments, features, and advantages of the present disclosure, exemplary implementations of the present disclosure will be further described in detail.

The exemplary embodiments of the present disclosure will be described in detail below in conjunction with the accompanying drawings, and the above and other embodiments, advantages, and features of the present disclosure would become more apparent to those skilled in the art.

## BRIEF DESCRIPTION OF THE DRAWINGS

Some exemplary embodiments of the present disclosure will hereinafter be described in detail with reference to the accompanying drawings that are exemplary merely, rather than limiting the present disclosure. In the accompanying drawings, same or similar components or parts are denoted by same reference numerals. It should be understood by those skilled in the art that these accompanying drawings are not necessarily drawn to scale, in which:

FIG. 1 is a flowchart of a power control method for a charging station (applied to an integrated controller of the charging station) according to an embodiment of the present disclosure.
FIG. 2 is a flowchart of a power control method for a charging station (applied to an integrated controller of the charging station) according to another embodiment of the present disclosure.
FIG. 3 is a flowchart of a power control method for a charging station (applied in a target charging device of the charging station) according to an embodiment of the present disclosure.

FIG. 4 is a flowchart of a power control method for a charging station (applied in a target charging device of the charging station) according to another embodiment of the present disclosure.

FIG. 5 is a flowchart of a power control method for a charging station combining an integrated controller and a target charging device according to an embodiment of the present disclosure.

## DETAILED DESCRIPTION

Some embodiments of the present disclosure will be described in detail below with reference to the accompanying drawings. Although some embodiments of the present disclosure are illustrated in the drawings, it should be understood that the present disclosure may be embodied in various forms and should not be construed as limited to the embodiments set forth herein. Instead, these embodiments are provided for a complete and thorough understanding of the present disclosure, and these embodiments can fully convey the scope of the present disclosure to those skilled in the art.

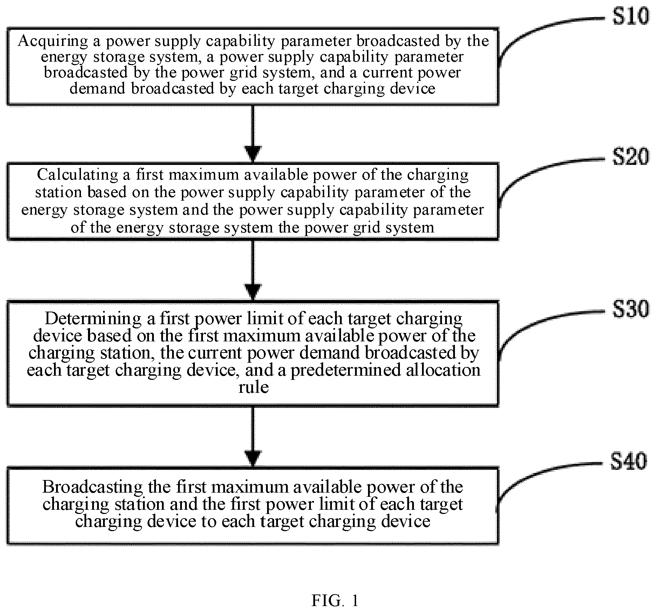

The present disclosure provides a power control method for a charging station, applied to an integrated controller of the charging station. FIG. 1 is a flowchart of a power control method for a charging station (applied to an integrated controller of the charging station) according to an embodiment of the present disclosure. In this embodiment, the charging station has an energy storage system and is connected to a power grid system. As illustrated in FIG. 1, the power control method includes actions at block S10 to block S40.

At block S10, a power supply capability parameter broadcasted by the energy storage system, a power supply capability parameter broadcasted by the power grid system, and a current power demand broadcasted by each target charging device are acquired. The target charging device is a charging device having a power output demand in the charging station.

At block S20, a first maximum available power of the charging station is calculated based on the power supply capability parameter of the energy storage system and the power supply capability parameter of the power grid system.

In an implementation, the first maximum available power is calculated by a formula (1).

$$APmax = GPmax + EPmax - RP \qquad (1)$$

where APmax represents the first maximum available power, GPmax represents a maximum available power of the power grid system, EPmax represents a maximum available power of the energy storage system, and RP represents a predetermined reserved power.

In another implementation, the first maximum available power is calculated by a formula (2).

$$APmax = Pc*(GPmax + EPmax) \qquad (2)$$

where APmax represents the first maximum available power, GPmax represents a maximum available power of the power grid system, EPmax represents a maximum available power of the energy storage system, and Pc represents a power coefficient, where $0 < Pc \leq 1$.

At block S30, a first power limit of each target charging device is determined based on the first maximum available power of the charging station, the current power demand broadcasted by each target charging device, and a predetermined allocation rule.

At block S40, the first maximum available power of the charging station and the first power limit of each target charging device is broadcasted to each target charging device. In this way, when receiving the broadcasted first maximum available power and the first power limit of each target charging device, each target charging device may perform power output based on the first power limit. Each target charging device may determine whether a sudden drop in a power supply capability occurs based on the received first maximum available power of the charging station, a currently acquired power supply capability parameter broadcasted by the energy storage system, and a currently acquired power supply capability parameter broadcasted by the power grid system. Each target charging device may reduce a power limit of the target charging device to a second power limit when the sudden drop in the power supply capability occurs. The second power limit may be calculated according to a predetermined algorithm. For example, the second power limit is equal to a difference between the first maximum available power and the second maximum available power. Moreover, other algorithms may also be used, which is not limited herein, i.e., active derating is performed to avoid power grid overload of the charging station.

Exemplarily, each target charging device may calculate a second maximum available power of the charging station based on the currently acquired power supply capability parameter broadcasted by the energy storage system and the currently acquired power supply capability parameter broadcasted by the power grid system, and determine that the sudden drop in the power supply capability occurs when the second maximum available power is smaller than the first maximum available power. Exemplarily, a calculation mode of the second maximum available power is the same as a calculation mode of the first maximum available power.

In this embodiment, the first maximum available power is calculated by the integrated controller of the charging station. Then, each target charging device determines whether the sudden drop in the power supply capability occurs based on the received first maximum available power, and a power supply capability parameter broadcasted by the energy storage system and a power supply capability parameter broadcasted by the power grid system which are currently acquired by the target charging device. Once it is determined that the sudden drop in the power supply capability occurs, the power limit of the target charging device is decreased to the second power limit, to ensure that electric powers of all the current target charging devices do not exceed the power supply capability of the charging station, so as to protect a power grid from overloaded operating conditions.

It should be noted that a broadcast of the power grid system and a broadcast of each target charging device are periodically performed. Correspondingly, blocks S10 to S40 are also periodically performed.

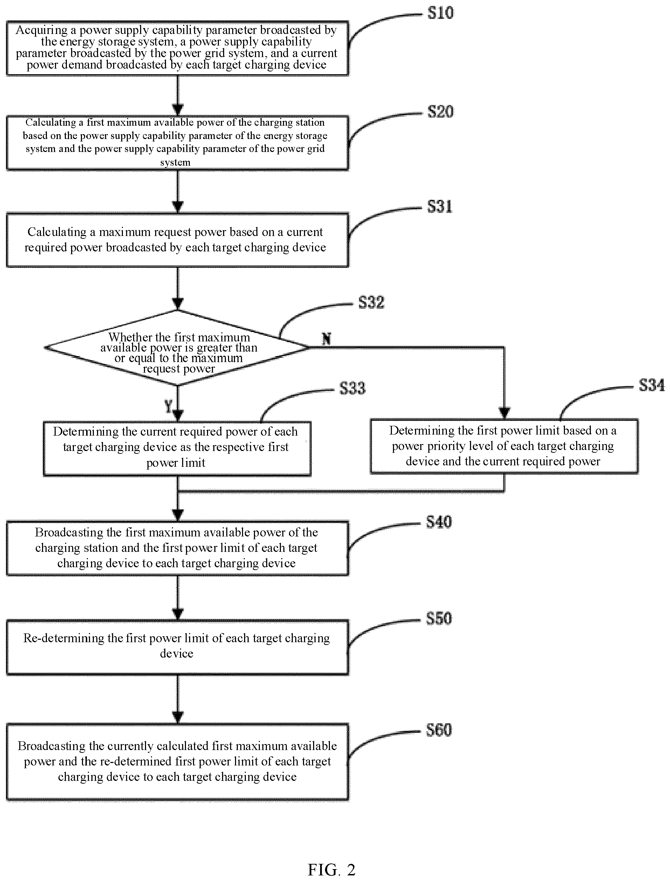

FIG. 2 is a flowchart of a power control method for a charging station (applied to an integrated controller of the charging station) according to another embodiment of the present disclosure. As illustrated in FIG. 2, in another embodiment, after the actions at block S40, the power control method further includes actions at block S50 to block S60.

At block S50, the first power limit of each target charging device is re-determined based on a currently calculated first maximum available power of the charging station, the current power demand broadcasted by each target charging device, and the predetermined allocation rule.

In this block, the currently calculated first maximum available power of the charging station refers to a first maximum available power of the charging station calculated by the integrated controller in a new cycle after the active derating is performed on the target charging device.

At block S60, the currently calculated first maximum available power and the re-determined first power limit of each target charging device are broadcasted to each target charging device, so that each target charging device determines whether the first power limit is recalculated based on the received first maximum available power of the charging station, the currently acquired power supply capability parameter broadcasted by the energy storage system, and the currently acquired power supply capability parameter broadcasted by the power grid system, and cancels reduction of the power limit of each target charging device and performs the power output based on the first power limit when the first power limit has been recalculated.

Exemplarily, a latest second maximum available power of the charging station is calculated based on a latest acquired power supply capability parameter broadcasted by the energy storage system and a latest acquired power supply capability parameter broadcasted by the power grid system. A latest first maximum available power of the charging station broadcasted by the integrated controller of the charging station and a latest first power limit of each target charging device are received. The power output is performed based on the latest received first power limit corresponding to each target charging device when the latest broadcasted first maximum available power is smaller than or equal to the latest second maximum available power.

In an embodiment, as illustrated in FIG. 2, the actions at block S30 include actions at block S31 to block S34.

At block S31, a maximum request power is calculated based on a current required power broadcasted by each target charging device. Exemplarily, the maximum request power is equal to a sum of the current required powers broadcasted by the target charging devices.

At block S32, it is determined that whether the first maximum available power is greater than or equal to the maximum request power; and when the first maximum available power is greater than or equal to the maximum request power, entering block S33, when the first maximum available power is smaller than the maximum request power, entering block S34.

At block S33, the current required power of each target charging device is determined as the first power limit.

At block S34, the first power limit is determined based on a power priority level of each target charging device and the current required power, to ensure that the first maximum available power is greater than or equal to a sum of first power limits of the target charging devices. In some embodiments, the target charging device with a high power priority level may be first satisfied. In other embodiments, the first maximum available power may also be evenly distributed among the target charging devices; or some first maximum available powers are evenly allocated to some target charging devices, and the rest of first maximum available powers are allocated to the other of the target charging devices based on the power priority level.

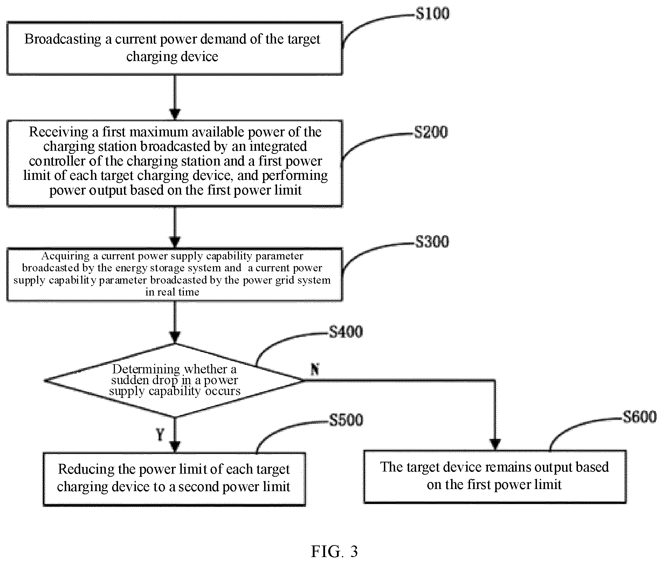

Correspondingly, the present disclosure further provides a power control method for a charging station, applied in each target charging device of the charging station. FIG. 3 is a flowchart of a power control method for a charging station (applied in each target charging device of the charging station) according to an embodiment of the present disclosure. In this embodiment, the target charging device is the charging device having the power output demand in the charging station. The charging station has the energy storage system and is connected to the power grid system. In an embodiment, as illustrated in FIG. 3, the power control method includes actions at block S100 to S500.

At block S 100, a current power demand of the target charging device is broadcasted.

At block S200, a first maximum available power of the charging station broadcasted by an integrated controller of the charging station and a first power limit of each target charging device are received, and power output is performed based on the first power limit. The first maximum available power of the charging station and the first power limit of each target charging device are calculated and determined by the integrated controller based on an acquired power supply capability parameter broadcasted by the energy storage system, an acquired power supply capability parameter broadcasted by the power grid system, the current power demand broadcasted by each target charging device, and a predetermined allocation rule. The calculation and determination method for the first maximum available power of the charging station and the calculation and determination method for the first power limit of each target charging device are described above, which is not described in detail herein.

At block S300, a current power supply capability parameter broadcasted by the energy storage system and a current power supply capability parameter broadcasted by the power grid system are acquired in real time.

At block S400, it is determined that whether a sudden drop in a power supply capability occurs based on the first maximum available power of the charging station, the currently acquired power supply capability parameter broadcasted by the energy storage system, and the currently acquired power supply capability parameter broadcasted by the power grid system. When the sudden drop in the power supply capability occurs, entering the block S500.

At block S500, the power limit of each target charging device is reduced to a second power limit, to avoid power grid overload of the charging station.

In some embodiments, when it is determined that no sudden drop in the power supply capability occurs in block S400, block S600 is entered. In block S600, the target charging device remains output based on the first power limit. It should be noted that blocks S100 to S500 are performed periodically. In addition, the order of block S300 and block S200 may be interchanged.

In this embodiment, the first maximum available power is calculated by the integrated controller of the charging station. Then, each target charging device determines whether the sudden drop in the power supply capability occurs based on the received first maximum available power, and a power supply capability parameter broadcasted by the energy storage system and a power supply capability parameter broadcasted by the power grid system which are currently acquired by the target charging device. Once it is determined that the sudden drop in the power supply capability occurs, the power limit of the target charging device is reduced to the second power limit, to ensure that the electric powers of all the current target charging devices do not exceed the power supply capability of the charging station, so as to protect the power grid from the overloaded operating conditions.

In an embodiment, the actions at block S400 include: calculating a second maximum available power of the charging station based on the currently acquired power supply capability parameter broadcasted by the energy storage system and the currently acquired power supply capability parameter broadcasted by the power grid system; and determining that the sudden drop in the power supply capability occurs when the second maximum available power is smaller than the first maximum available power.

In an implementation, the second maximum available power is calculated by a formula (3).

$$SPmax=GPmax+EPmax-RP \tag{3}$$

where SPmax represents the second maximum available power of the charging station, GPmax represents a maximum available power of the power grid system, EPmax represents a maximum available power of the energy storage system, and RP represents a predetermined reserved power.

In another implementation, the second maximum available power is calculated by a formula (4).

$$SPmax=Pc*(GPmax+EPmax) \tag{4}$$

where SPmax represents the second maximum available power of the charging station, GPmax represents a maximum available power of the power grid system, EPmax represents a maximum available power of the energy storage system, and Pc represents a power coefficient, where $0 < Pc \leq 1$.

Exemplarily, the second power limit is equal to a difference between the first maximum available power and the second maximum available power. In other embodiments, the second power limit may be calculated by using other algorithms, such as a value subtracted from the difference between the first maximum available power and the second maximum available power. In practical application, there is generally no case where a plurality of target charging devices simultaneously has the second maximum available power smaller than the first maximum available power. When a predetermined target charging device determines that the sudden drop in the power supply capability occurs, the power of the target charging device is immediately controlled for derating. Therefore, an effect of actively and timely response may be achieved. Moreover, the overload operating condition of the power grid is avoided. This method is simple in calculation and high in response speed, and may better protect the power grid.

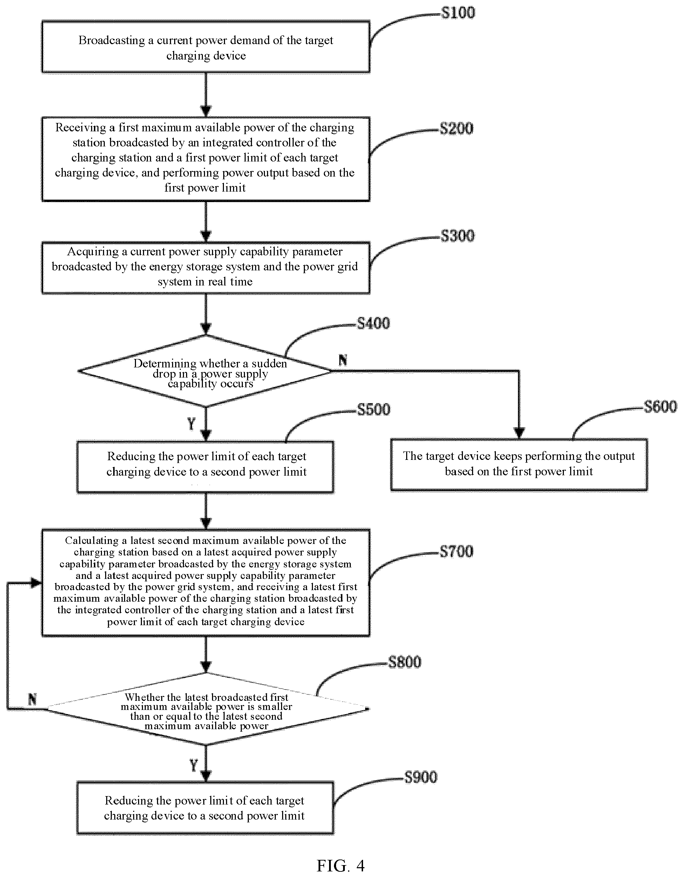

FIG. 4 is a flowchart of a power control method for a charging station (applied in each target charging device of the charging station) according to another embodiment of the present disclosure. As illustrated in FIG. 4, in another embodiment, after the actions at block S500, the method further includes actions at block S700 to block 900.

At block S700, a latest second maximum available power of the charging station is calculated based on a latest acquired power supply capability parameter broadcasted by the energy storage system and a latest acquired power supply capability parameter broadcasted by the power grid system, and a latest first maximum available power of the charging station broadcasted by the integrated controller of the charging station and a latest first power limit of each target charging device are received.

At block S800, it is determined that whether the latest broadcasted first maximum available power is smaller than or equal to the latest second maximum available power; and when the latest broadcasted first maximum available power is smaller than or equal to the latest second maximum available power, entering block S900, when the latest broadcasted first maximum available power is greater than the latest second maximum available power, returning back to block S700.

At block S900, the power output is performed based on the latest received first power limit corresponding to each target charging device.

The power control method for the charging station applied to the integrated controller and the power control method for the charging station applied in each target charging device are introduced above, respectively. The power control method for the charging station in the present disclosure is described in more detail through one exemplary embodiment in combination with the integrated controller of the charging station and the target charging device.

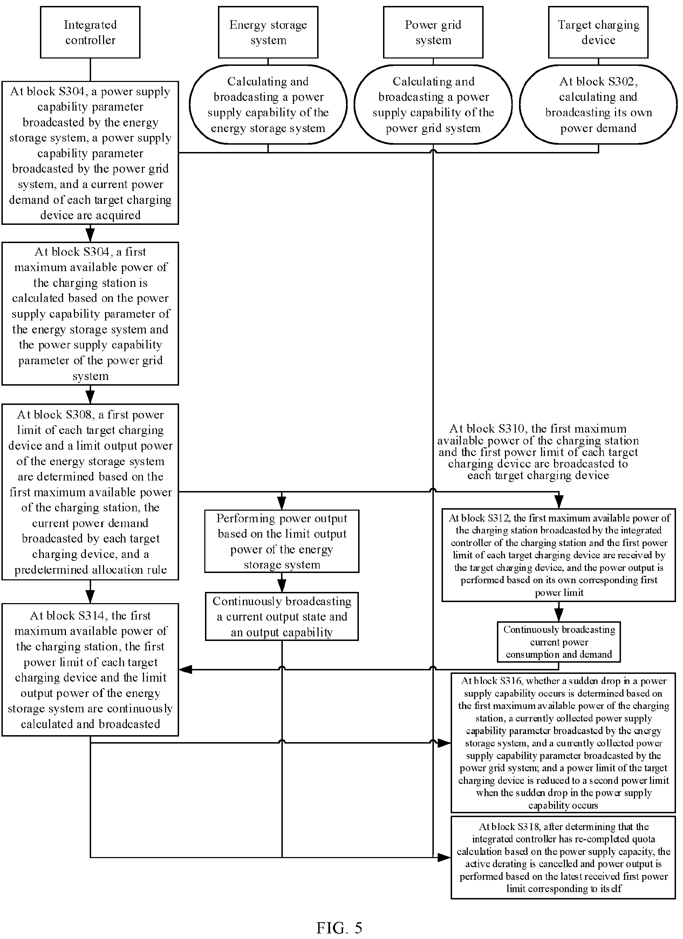

FIG. 5 is a flowchart of a power control method for a charging station combining an integrated controller and a target charging device according to an embodiment of the present disclosure. In this embodiment, the charging station has the energy storage system, and is provided with the integrated controller and the plurality of target charging devices. The target charging device is the charging device having the power output demand in the charging station. Moreover, the charging station is connected to the power grid system. As illustrated in FIG. 5, the power control method in this embodiment includes actions at blocks S302 to S318.

At block S302, the target charging device calculates and broadcasts a power demand of target charging device.

At block S304, the integrated controller acquires the power supply capability parameter broadcasted by the energy storage system, the power supply capability parameter broadcasted by the power grid system, and the current power demand broadcasted by each target charging device. The power supply capability parameter broadcasted by the energy storage system and the power supply capability parameter broadcasted by the power grid system are calculated and broadcasted by the energy storage system and the power grid system, respectively.

At block S306, the integrated controller calculates the first maximum available power of the charging station based on the power supply capability parameter of the energy storage system and the power supply capability parameter of the power grid system.

At block S308, the integrated controller determines the first power limit of each target charging device based on the first maximum available power of the charging station, the current power demand broadcasted by each target charging device, and the predetermined allocation rule, and determines a limit output power of the energy storage system.

At block S310, the integrated controller broadcasts the first maximum available power of the charging station and the first power limit of each target charging device to each target charging device (i.e., power quota of each target charging device).

Meanwhile, the integrated controller also broadcasts the limit output power of the energy storage system (i.e., a discharge capability requirement of the energy storage system), so that the energy storage system performs power output according to the calculated limit output power of the energy storage system. The energy storage system may also continuously broadcast a current output state and an output capability of the energy storage system, to enable the integrated controller and each target charging device to perform corresponding calculations.

At block S312, the target charging device receives the first maximum available power of the charging station broadcasted by the integrated controller of the charging station and the first power limit of each target charging device, and performs the power output based on the first power limit. Each target charging device may also continuously broadcast current power consumption and power demand thereof.

At block S314, the integrated controller continuously calculates and broadcasts the first maximum available power of the charging station, the first power limit of each target charging device, and the limit output power of the energy storage system.

At block S316, the target charging device determines whether the sudden drop in the power supply capability occurs based on the first maximum available power of the charging station, the currently acquired power supply capability parameter broadcasted by the energy storage system, and the currently acquired power supply capability parameter broadcasted by the power grid system. The target charging device reduces the power limit of each target charging device to the second power limit (i.e., performs active derating) when the sudden drop in the power supply capability occurs.

In some embodiments, the target charging device calculates the second maximum available power of the charging station based on the currently acquired power supply capability parameter broadcasted by the energy storage system and the currently acquired power supply capability parameter broadcasted by the power grid system. The target charging device determines that the sudden drop in the power supply capability occurs when the second maximum available power is smaller than the first maximum available power.

At block S318, after the target charging device determines that the integrated controller re-completes a quota calculation based on the power supply capability, the target charging device cancels the active derating, and performs power output based on the latest received first power limit value corresponding to the target charging device.

In some embodiments, each target charging device calculates the latest second maximum available power of the charging station based on the latest acquired power supply capability parameter broadcasted by the energy storage system and the latest acquired power supply capability parameter broadcasted by the power grid system. Each target charging device receives the latest first maximum available power of the charging station broadcasted by the integrated controller of the charging station and the latest first power limit of each target charging device. Each target charging device performs the power output based on the latest received first power limit corresponding to each target charging device when the latest broadcasted first maximum available power is smaller than or equal to the latest second maximum available power, i.e., when the latest broadcasted first maximum available power is smaller than or equal to the latest second maximum available power. It is considered that the integrated controller re-completed the quota calculation based on the power supply capability, and the latest second maximum available power is calculated according to the latest acquired power supply capability parameters broadcasted by the energy storage system and the latest acquired power supply capability parameters broadcasted by the power grid system.

In this embodiment, the electric powers of all target charging devices are ensured not to exceed the power supply capability of the charging station by operating an integrated power distribution scheduling algorithm on the integrated controller in combination with a distributed control algorithm operating on the target charging device side, to protect the power grid from the overloaded operating.

Based on the same technical concept, the present disclosure further provides a power control apparatus of a charging station, applied in an integrated controller of the charging station. The power control apparatus includes a memory and a processor. The memory has a control program stored therein. The control program is configured to, when executed by the processor, implement the power control method applied in the integrated controller according to any one of the above embodiments. The processor may be a central processing unit (CPU), a digital processing unit, or the like. The processor sends and receives data through a communication interface. The memory is configured to store a program executed by the processor. The memory is any medium that may be used to carry or store desired program code in the form of instructions or data structures and may be accessed by a computer, or a combination of a plurality of memories. A computing program may be downloaded from a computer-readable storage medium to a respective computing/processing device or to a computer or external storage device via a network (e.g., the Internet, a local area network, a wide area network, and/or a wireless network).

Based on the same technical concept, the present disclosure further provides a power control apparatus of a charging station, applied in each target charging device of the charging station. The power control apparatus includes a memory and a processor. The memory has a control program stored therein. The control program is configured to, when executed by the processor, implement the power control method applied in the target charging device according to any one of the above embodiments. The processor may be a central processing unit (CPU), a digital processing unit, or the like. The processor sends and receives data through a communication interface. The memory is configured to store a program executed by the processor. The memory is any medium that may be used to carry or store desired program code in the form of instructions or data structures and may be accessed by a computer, or a combination of a plurality of memories. The computing program may be downloaded from a computer-readable storage medium to a respective computing/processing device or to a computer or external storage device via a network (e.g., the Internet, a local area network, a wide area network, and/or a wireless network).

Based on the same technical concept, the present disclosure further provides a power control system of a charging station, including the power control apparatus of the charging station applied in the integrated controller of the charging station and the power control apparatus of the charging station applied in each target charging device of the charging station.

## Claims

1. A power control method for a charging station, applied to an integrated controller of the charging station, wherein the charging station has an energy storage system and is connected to a power grid system, the power control method comprising:

   S10: acquiring a power supply capability parameter broadcasted by the energy storage system, a power supply capability parameter broadcasted by the power grid system and a current power demand broadcasted by each target charging device, the target charging device being a charging device having a power output demand in the charging station;

S20: calculating a first maximum available power of the charging station based on the power supply capability parameter of the energy storage system and the power supply capability parameter of the power grid system;

S30: determining a first power limit of each target charging device based on the first maximum available power of the charging station, the current power demand broadcasted by each target charging device, and a predetermined allocation rule; and

S40: broadcasting the first maximum available power of the charging station and the first power limit of each target charging device to each target charging device, so that each target charging device performs power output based on the first power limit, determines whether a sudden drop in a power supply capability occurs based on the received first maximum available power of the charging station, a currently acquired power supply capability parameter broadcasted by the energy storage system, and a currently acquired power supply capability parameter broadcasted by the power grid system, and reduces a power limit of the target charging device to a second power limit when the sudden drop in the power supply capability occurs, to avoid power grid overload of the charging station, **characterised in that**

the first maximum available power is calculated as APmax=GPmax+EPmax-RP where APmax represents the first maximum available power, GPmax represents a maximum available power of the power grid system, EPmax represents a maximum available power of the energy storage system, and RP represents a predetermined reserved power; or

the first maximum available power is calculated as APmax=Pc*(GPmax+EPmax), where APmax represents the first maximum available power, GPmax represents a maximum available power of the power grid system, EPmax represents a maximum available power of the energy storage system, and Pc represents a power coefficient, where 0<Pc<1.

2. The power control method according to claim 1, further comprising, subsequent to broadcasting the first maximum available power of the charging station and the first power limit of each target charging device to each target charging device:

re-determining the first power limit of each target charging device based on a currently calculated first maximum available power of the charging station, the current power demand broadcasted by each target charging device, and the predetermined allocation rule; and

broadcasting the currently calculated first maximum available power and the re-determined first power limit of each target charging device to each target charging device, so that each target charging device determines whether the first power limit is recalculated based on the received first maximum available power of the charging station and the currently acquired power supply capability parameter broadcasted by the energy storage system and the currently acquired power supply capability parameter broadcasted by the energy storage system the power grid system, and cancels reduction of the power limit of each target charging device and performs the power output based on the first power limit when the first power limit has been recalculated.

3. The power control method according to claim 1 or 2, wherein said determining the first power limit of each target charging device based on the first maximum available power of the charging station, the current power demand broadcasted by each target charging device, and the predetermined allocation rule comprises:

calculating a maximum request power based on a current required power broadcasted by each target charging device; and

determining the current required power of each target charging device as the first power limit when the first maximum available power is greater than or equal to the maximum request power.

4. The power control method according to claim 3, further comprising, subsequent to said calculating the maximum request power based on the current demand power broadcasted by each target charging device: determining the first power limit based on a power priority level of each target charging device and the current required power when the first maximum available power is smaller than the maximum request power, to ensure that the first maximum available power is greater than or equal to a sum of first power limits of the target charging devices.

5. A power control method for a charging station, applied in each target charging device of the charging station, wherein the target charging device is a charging device having a power output demand in the charging station, the charging station has an energy storage system and is connected to a power grid system, the power control method comprising:

S100: broadcasting a current power demand of each target charging device;

S200: receiving a first maximum available power of the charging station broadcasted by an integrated controller of the charging station and a first power limit of each target charging device, and performing power output based on the first power limit, the first maximum available power of the charging station and the first power limit of each target charging device being calculated and determined by the integrated controller based on an acquired power supply capability parameter broadcasted by the energy storage system, an acquired power supply capability parameter broadcasted by the power grid system, the current power demand broadcasted by each target charging device, and a predetermined allocation rule;

S300: acquiring a current power supply capability parameter broadcasted by the energy storage system and a current power supply capability parameter broadcasted by the power grid system in real time, and

S400: determining whether a sudden drop in a power supply capability occurs based on the first maximum available power of the charging station, the currently acquired power supply capability parameter broadcasted by the energy storage system, and the currently acquired power supply capability parameter broadcasted by the power grid system, **characterised in that** the first maximum available power is calculated as $APmax=GPmax+EPmax-RP$ where APmax represents the first maximum available power, GPmax represents a maximum available power of the power grid system, EPmax represents a maximum available power of the energy storage system, and RP represents a predetermined reserved power; or the first maximum available power is calculated as $APmax=Pc*(GPmax+EPmax)$, where APmax represents the first maximum available power, GPmax represents a maximum available power of the power grid system, EPmax represents a maximum available power of the energy storage system, and Pc represents a power coefficient, where $0<Pc<1$; and

S500: reducing the power limit of each target charging device to a second power limit when the sudden drop in the power supply capability occurs, to avoid power grid overload of the charging station.

6. The power control method according to claim 5, wherein said determining whether the sudden drop in the power supply capability occurs based on the first maximum available power of the charging station, the currently acquired power supply capability parameter broadcasted by the energy storage system, and the currently acquired power supply capability parameter broadcasted by the power grid system comprises:

calculating a second maximum available power of the charging station based on the currently acquired power supply capability parameter broadcasted by the energy storage system and the currently acquired power supply capability parameter broadcasted by the power grid system; and

determining that the sudden drop in the power supply capability occurs when the second maximum available power is smaller than the first maximum available power.

7. The power control method according to claim 5, wherein further comprising, subsequent to reducing the power limit of each target charging device to the second power limit:

calculating a latest second maximum available power of the charging station based on a latest acquired power supply capability parameter broadcasted by the energy storage system and a latest acquired power supply capability parameter broadcasted by the power grid system, and receiving a latest first maximum available power of the charging station broadcasted by the integrated controller of the charging station and a latest first power limit of each target charging device; and

performing the power output based on the latest received first power limit corresponding to each target charging device when the latest broadcasted first maximum available power is smaller than or equal to the latest second maximum available power.

8. The power control method according to claim 6 or 7, wherein the second maximum available power is calculated as $SPmax=GPmax+EPmax-RP$,

where SPmax represents the second maximum available power of the charging station, GPmax represents a maximum available power of the power grid system, EPmax represents a maximum available power of the energy storage system, and RP represents a predetermined reserved power.

9. The power control method according to claim 6 or 7, wherein the second maximum available power is calculated as $SPmax=Pc*(GPmax+EPmax)$,

where SPmax represents the second maximum available power of the charging station, GPmax represents a maximum available power of the power grid system, EPmax represents a maximum available power of the energy storage system, and Pc represents a power coefficient, where $0<Pc\leq1$.

10. The power control method according to claim 6, wherein the second power limit is equal to a difference between the first maximum available power and the second maximum available power.

11. A power control apparatus of a charging station, applied in an integrated controller of the charging station, the power control apparatus comprising:

a memory having a control program stored therein; and
a processor,
wherein the control program is configured to, when executed by the processor, implement the power control method according to any one of claims 1 to 4.

12. A power control apparatus of a charging station, applied in each target charging device of the charging station, the power control apparatus comprising:

a memory having a control program stored therein; and
a processor,
wherein the control program is configured to, when executed by the processor, implement the power control method according to any one of claims 5 to 10.

13. A power control system of a charging station, the power control system comprising the power control apparatus according to claim 11 and the power control apparatus according to claim 12.

**Patentansprüche**

1. Leistungssteuerverfahren für eine Ladestation, das auf eine integrierte Steuerung der Ladestation angewendet wird, wobei die Ladestation ein Energiespeichersystem hat und mit einem Stromnetzsystem verbunden ist, wobei das Leistungssteuerverfahren umfasst:

S10: Erfassen eines vom Energiespeichersystem gesendeten Stromversorgungsfähigkeitsparameters, eines vom Stromnetzsystem gesendeten Stromversorgungsfähigkeitsparameters und eines von jeder Ziel-Ladevorrichtung gesendeten aktuellen Strombedarfs, wobei die Ziel-Ladevorrichtung eine Ziel-Ladevorrichtung ist, die einen Leistungsabgabebedarf in der Ladestation hat;
S20: Berechnen einer ersten maximal verfügbaren Leistung der Ladestation auf der Grundlage des Stromversorgungsfähigkeitsparameters des Energiespeichersystems und des Stromversorgungsfähigkeitsparameters des Stromnetzsystems;
S30: Bestimmen einer ersten Leistungsgrenze jeder Ziel-Ladevorrichtung auf der Grundlage der ersten maximal verfügbaren Leistung der Ladestation, des aktuellen Leistungsbedarfs, der von jeder Ziel-Ladevorrichtung gesendet wird, und einer vorgegebenen Zuweisungsregel; und
S40: Senden der ersten maximal verfügbaren Leistung der Ladestation und der ersten Leistungsgrenze jeder Ziel-Ladevorrichtung an jede Ziel-Ladevorrichtung, so dass jede Ziel-Ladevorrichtung eine Leistungsabgabe basierend auf der ersten Leistungsgrenze durchführt; Bestimmen, ob ein plötzlicher Abfall einer Stromversorgungsfähigkeit auftritt, basierend auf der empfangenen ersten maximal verfügbaren Leistung der Ladestation, einem aktuell erfassten Stromversorgungsfähigkeitsparameters, der von dem Energiespeichersystem gesendet wird, und einem aktuell erfassten Stromversorgungsfähigkeitsparameter, der von dem Stromnetzsystem gesendet wird, und Reduzieren einer Leistungsgrenze der Ziel-Ladevorrichtung auf eine zweite Leistungsgrenze, wenn der plötzliche Abfall der Stromversorgungsfähigkeit auftritt, um eine Stromnetzüberlastung der Ladestation zu vermeiden, **dadurch gekennzeichnet, dass**
die erste maximal verfügbare Leistung als APmax=GPmax+EPmax-RP berechnet wird, wobei APmax die erste maximal verfügbare Leistung darstellt, GPmax eine maximal verfügbare Leistung des Stromnetzsystems darstellt, EPmax eine maximal verfügbare Leistung des Energiespeichersystems darstellt und RP eine vorbestimmte reservierte Leistung darstellt; oder
die erste maximal verfügbare Leistung als APmax=Pc*(GPmax+EPmax) berechnet wird, wobei APmax die erste maximal verfügbare Leistung darstellt, GPmax eine maximal verfügbare Leistung des Stromnetzsystems darstellt, EPmax eine maximal verfügbare Leistung des Energiespeichersystems darstellt und Pc einen Leistungskoeffizienten darstellt, wobei 0<Pc<1.

2. Leistungssteuerverfahren nach Anspruch 1, wobei nach dem Senden der ersten maximal verfügbaren Leistung der Ladestation und der ersten Leistungsgrenze jeder Ziel-Ladevorrichtung an jede Ziel-Ladevorrichtung es ferner Folgendes umfasst:

erneutes Bestimmen der ersten Leistungsgrenze jeder Ziel-Ladevorrichtung auf der Grundlage einer aktuell berechneten ersten maximal verfügbaren Leistung der Ladestation, des aktuellen Leistungsbedarfs, der von jeder Ziel-Ladevorrichtung gesendet wird, und der vorgegebenen Zuweisungsregel; und
Senden der aktuell berechneten ersten maximal verfügbaren Leistung und der neu bestimmten ersten Leistungsgrenze jeder Ziel-Ladevorrichtung an jede Ziel-Ladevorrichtung, so dass jede Ziel-Ladevorrichtung feststellt, ob die erste Leistungsgrenze basierend auf der empfangenen ersten maximal verfügbaren Leistung der Ladestation und dem aktuell erfassten Stromversorgungsfähigkeitsparameter, der von dem Energiespeichersystem gesendet wird, und dem aktuell erfassten Parameter für die Stromversorgungsfähigkeit, der von dem Energiespeichersystem gesendet wird, neu berechnet wird, und die Reduzierung der Leistungsgrenze jeder Ziel-Ladevorrichtung aufhebt und die Leistungsabgabe auf der Grundlage der ersten Leistungsgrenze durchführt, wenn die erste Leistungsgrenze neu berechnet worden ist.

3. Leistungssteuerverfahren nach Anspruch 1, wobei das Bestimmen der ersten Leistungsgrenze jeder Ziel-Ladevorrichtung auf der Grundlage der ersten maximal verfügbaren Leistung der Ladestation, des aktuellen Leistungsbedarfs, der von jeder Ziel-Ladevorrichtung gesendet wird, und der vorgegebenen Zuweisungsregel; und

Berechnen einer maximalen Anforderungsleistung auf der Grundlage einer aktuellen erforderlichen Leistung, die von jeder Ziel-Ladevorrichtung gesendet wird; und
Bestimmung der aktuell erforderlichen Leistung jeder Ziel-Ladevorrichtung als erste Leistungsgrenze, wenn die erste maximal verfügbare Leistung größer oder gleich der maximal Anforderungsleistung ist.

4. Leistungssteuerverfahren nach Anspruch 3 umfasst ferner, dass nach dem Berechnen der ersten maximal Anforderungsleistung auf der Grundlage der von jeder Ziel-Ladevorrichtung gesendeten aktuellen Bedarfleistung es ferner Folgendes umfasst:
Bestimmen der ersten Leistungsgrenze auf der Grundlage einer Leistungsprioritätsstufe jeder Ziel-Ladevorrichtung und der aktuell erforderlichen Leistung, wenn die erste maximal verfügbare Leistung kleiner ist als die maximale Anforderungsleistung, um sicherzustellen, dass die erste maximal verfügbare Leistung größer oder gleich einer Summe der ersten Leistungsgrenzen der Ziel-Ladevorrichtungen ist.

5. Leistungssteuerverfahren für eine Ladestation, das in jeder Ziel-Ladevorrichtung der Ladestation angewendet wird, wobei die Ziel-Ladevorrichtung eine Ladevorrichtung ist, die einen Leistungsausgangsbedarf in der Ladestation hat, wobei die Ladestation ein Energiespeichersystem hat und mit einem Stromnetzsystem verbunden ist, wobei das Leistungssteuerverfahren umfasst:

S100: Senden des aktuellen Leistungsbedarfs der einzelnen Ziel-Ladevorrichtung;
S200: Empfangen einer ersten maximal verfügbaren Leistung der Ladestation, die von einer integrierten Steuerung der Ladestation gesendet wird, und einer ersten Leistungsgrenze jeder Ziel-Ladevorrichtung, und Durchführen einer Leistungsabgabe auf der Grundlage der ersten Leistungsgrenze, wobei die erste maximal verfügbare Leistung der Ladestation und die erste Leistungsgrenze jeder Ziel-Ladevorrichtung von der integrierten Steuerung auf der Grundlage eines erfassten Stromversorgungsfähigkeitsparameters, der von dem Energiespeichersystem gesendet wird, eines erfassten Stromversorgungsfähigkeitsparameters, der von dem Stromnetzsystem gesendet wird, des aktuellen Leistungsbedarfs, der von jeder Ziel-Ladevorrichtung gesendet wird, und einer vorbestimmten Zuweisungsregel berechnet und bestimmt werden;
S300: Erfassen eines vom Energiespeichersystem gesendeten aktuellen Stromversorgungsfähigkeitsparameters und eines vom Stromnetzsystem gesendeten aktuellen Stromversorgungsfähigkeitsparameters in Echtzeit, und
S400: Bestimmen, ob ein plötzlicher Abfall der Stromversorgungsfähigkeit auftritt, basierend auf der ersten maximal verfügbaren Leistung der Ladestation, dem aktuell erfassten Stromversorgungsfähigkeitsparameter, der vom Energiespeichersystem gesendet wird, und dem aktuell erfassten Stromversorgungsfähigkeitsparameter, der vom Stromnetzsystem gesendet wird, **dadurch gekennzeichnet, dass** die erste maximal verfügbare Leistung berechnet wird als $APmax=GPmax+EPmax-RP$ wobei $APmax$ die erste maximal verfügbare Leistung darstellt, $GPmax$ eine maximal verfügbare Leistung des Stromnetzsystems darstellt, $EPmax$ eine maximal verfügbare Leistung des Energiespeichersystems darstellt und $RP$ eine vorbestimmte reservierte Leistung darstellt; oder die erste maximal verfügbare Leistung als $APmax=Pc*(GPmax+EPmax)$ berechnet wird, wobei $APmax$ die erste maximal verfügbare Leistung darstellt, $GPmax$ eine maximal verfügbare Leistung des Stromnetzsystems darstellt, EPmax eine maximal verfügbare Leistung des Energiespeichersystems darstellt und Pc einen Leistungskoeffizienten darstellt, wobei 0<Pc<1; und

S500: Reduzieren der Leistungsgrenze jeder Ziel-Ladevorrichtung auf eine zweite Leistungsgrenze, wenn ein plötzlicher Abfall der Stromversorgungsfähigkeit auftritt, um eine Stromnetzüberlastung der Ladestation zu vermeiden.

6. Leistungssteuerverfahren nach Anspruch 5, wobei das Bestimmen, ob ein plötzlicher Abfall der Stromversorgungsfähigkeit auftritt, basierend auf der ersten maximal verfügbaren Leistung der Ladestation, dem aktuell erfassten Stromversorgungsfähigkeitsparameter, der vom Energiespeichersystem gesendet wird, und dem aktuell erfassten Stromversorgungsfähigkeitsparameter, der vom Stromnetzsystem gesendet wird, Folgendes umfasst:

Berechnen einer zweiten maximal verfügbaren Leistung der Ladestation basierend auf dem aktuell erfassten Stromversorgungsfähigkeitsparameter, der vom Energiespeichersystem gesendet wird, und dem aktuell erfassten Stromversorgungsfähigkeitsparameter, der vom Stromnetzsystem gesendet wird; und

Bestimmen, dass der plötzliche Abfall der Stromversorgungsfähigkeit auftritt, wenn die zweite maximal verfügbare Leistung kleiner als die erste maximal verfügbare Leistung ist.

7. Leistungssteuerverfahren nach Anspruch 5, das ferner Folgendes umfasst, nachdem die Leistungsgrenze jeder Ziel-Ladevorrichtung auf die zweite Leistungsgrenze reduziert wurde:

Berechnen einer letzten zweiten maximal verfügbaren Leistung der Ladestation basierend auf einem letzten erfassten Stromversorgungsfähigkeitsparameter, der vom Energiespeichersystem gesendet wird, und einem letzten erfassten Stromversorgungsfähigkeitsparameter, der vom Stromnetzsystem gesendet wird; und Empfangen einer neuesten ersten maximal verfügbaren Leistung der Ladestation, die vom integrierten Steuerung der Ladestation gesendet wird, und einer neuesten ersten Leistungsgrenze jeder Ziel-Ladevorrichtung; und Durchführen der Leistungsabgabe basierend auf der zuletzt empfangenen ersten Leistungsgrenze, die jeder Ziel-Ladevorrichtung entspricht, wenn die zuletzt gesendete erste maximal verfügbare Leistung kleiner oder gleich der zuletzt gesendeten zweiten maximal verfügbaren Leistung ist.

8. Leistungsregelungsverfahren nach Anspruch 6 oder 7, wobei die zweite maximal verfügbare Leistung wie folgt berechnet wird: SPmax = GPmax + EPmax - RP.
wobei SPmax die zweite maximal verfügbare Leistung der Ladestation darstellt, GPmax eine maximal verfügbare Leistung des Stromnetzsystems darstellt, EPmax eine maximal verfügbare Leistung des Energiespeichersystems darstellt und RP eine vorbestimmte reservierte Leistung darstellt;

9. Leistungsregelungsverfahren nach Anspruch 6 oder 7, wobei die zweite maximal verfügbare Leistung wie folgt berechnet wird: SPmax=Pc*(GPmax+EPmax),
wobei SPmax die zweite maximal verfügbare Leistung der Ladestation darstellt, GPmax eine maximal verfügbare Leistung des Stromnetzsystems darstellt, EPmax eine maximal verfügbare Leistung des Energiespeichersystems darstellt und Pc einen Leistungskoeffizienten darstellt, wobei 0<Pc≤1.

10. Leistungssteuerverfahren nach Anspruch 6, wobei die zweite Leistungsgrenze gleich einer Differenz zwischen der ersten maximal verfügbaren Leistung und der zweiten maximal verfügbaren Leistung ist.

11. Leistungssteuervorrichtung einer Ladestation, die in einem integrierten Steuerung der Ladestation eingesetzt wird, wobei die Leistungssteuervorrichtung Folgendes umfasst:

einen Speicher mit einem darin gespeicherten Steuerprogramm; und
ein Prozessor,
wobei das Steuerprogramm so konfiguriert ist, dass es bei Ausführung durch den Prozessor das Leistungssteuerverfahren nach einem der Ansprüche 1 bis 4 implementiert.

12. Leistungssteuervorrichtung einer Ladestation, die in jedem Ziel-Ladevorrichtung der Ladestation eingesetzt wird, wobei die Leistungssteuervorrichtung Folgendes umfasst:

einen Speicher mit einem darin gespeicherten Steuerprogramm; und
ein Prozessor,
wobei das Steuerprogramm so konfiguriert ist, dass es bei Ausführung durch den Prozessor das Leistungssteuerverfahren nach einem der Ansprüche 5 bis 10 implementiert.

13. Leistungssteuersystem einer Ladestation, wobei das Leistungssteuersystem die Leistungssteuervorrichtung gemäß Anspruch 11 und die Leistungssteuervorrichtung gemäß Anspruch 12 umfasst.

**Revendications**

1. Procédé de contrôle de puissance pour une station de charge, appliqué à un contrôleur intégré de la station de charge, la station de charge comprenant un système de stockage d'énergie et étant connectée à un système de réseau électrique, le procédé de contrôle de puissance comprenant :

S10 : acquérir un paramètre de capacité d'alimentation diffusé par le système de stockage d'énergie, un paramètre de capacité d'alimentation diffusé par le système de réseau électrique et une demande de puissance actuelle diffusée par chaque dispositif de charge cible, le dispositif de charge cible étant un dispositif de charge ayant une demande de sortie de puissance dans la station de charge ;
S20 : calculer une première puissance maximale disponible de la station de charge sur la base du paramètre de capacité d'alimentation du système de stockage d'énergie et du paramètre de capacité d'alimentation du système de réseau électrique ;
S30 : déterminer une première limite de puissance pour chaque dispositif de charge cible sur la base de la première puissance maximale disponible de la station de charge, de la demande de puissance actuelle diffusée par chaque dispositif de charge cible et d'une règle d'allocation prédéfinie ; et
S40 : diffuser la première puissance maximale disponible de la station de charge et la première limite de puissance de chaque dispositif de charge cible à chaque dispositif de charge cible, de sorte que chaque dispositif de charge cible effectue une sortie de puissance sur la base de la première limite de puissance, détermine si une chute soudaine de la capacité d'alimentation se produit sur la base de la première puissance maximale disponible reçue de la station de charge, d'un paramètre de capacité d'alimentation actuellement acquis diffusé par le système de stockage d'énergie et d'un paramètre de capacité d'alimentation actuellement acquis diffusé par le système de réseau électrique, et réduit la limite de puissance du dispositif de charge cible à une deuxième limite de puissance lorsque la chute soudaine de la capacité d'alimentation se produit, afin d'éviter une surcharge du réseau électrique de la station de charge, **caractérisé en ce que**,
la première puissance maximale disponible est calculée comme APmax=GPmax+EPmax-RP, où APmax représente la première puissance maximale disponible, GPmax représente une puissance maximale disponible du système de réseau électrique, EPmax représente une puissance maximale disponible du système de stockage d'énergie et RP représente une puissance réservée prédéfinie ; ou
la première puissance maximale disponible est calculée comme APmax=Pc * (GPmax+EPmax), où APmax représente la première puissance maximale disponible, GPmax représente une puissance maximale disponible du système de réseau électrique, EPmax représente une puissance maximale disponible du système de stockage d'énergie et Pc représente un coefficient de puissance, où 0 < Pc < 1.

2. Procédé de contrôle de puissance selon la revendication 1, comprenant en outre, après la diffusion de la première puissance maximale disponible de la station de charge et de la première limite de puissance de chaque dispositif de charge cible à chaque dispositif de charge cible :

redéterminer la première limite de puissance de chaque dispositif de charge cible sur la base d'une première puissance maximale disponible actuellement calculée de la station de charge, de la demande de puissance actuelle diffusée par chaque dispositif de charge cible et de la règle d'allocation prédéfinie ; et
diffuser la première puissance maximale disponible actuellement calculée et la première limite de puissance redéterminée de chaque dispositif de charge cible à chaque dispositif de charge cible, de sorte que chaque dispositif de charge cible détermine si la première limite de puissance est recalculée sur la base de la première puissance maximale disponible reçue de la station de charge et du paramètre de capacité d'alimentation actuellement acquis diffusé par le système de stockage d'énergie et du paramètre de capacité d'alimentation actuellement acquis diffusé par le système de réseau électrique, et annule la réduction de la limite de puissance de chaque dispositif de charge cible et effectue la sortie de puissance sur la base de la première limite de puissance lorsque la première limite de puissance a été recalculée.

3. Procédé de contrôle de puissance selon la revendication 1 ou 2, dans lequel ladite détermination de la première limite de puissance de chaque dispositif de charge cible sur la base de la première puissance maximale disponible de la station de charge, de la demande de puissance actuelle diffusée par chaque dispositif de charge cible et de la règle d'allocation prédéfinie comprend :

calculer une puissance de demande maximale sur la base d'une puissance requise actuelle diffusée par chaque dispositif de charge cible ; et

déterminer la puissance requise actuelle de chaque dispositif de charge cible comme la première limite de puissance lorsque la première puissance maximale disponible est supérieure ou égale à la puissance de demande maximale.

4. Procédé de contrôle de puissance selon la revendication 3, comprenant en outre, après ledit calcul de la puissance de demande maximale sur la base de la puissance de demande actuelle diffusée par chaque dispositif de charge cible : déterminer la première limite de puissance sur la base d'un niveau de priorité de puissance de chaque dispositif de charge cible et de la puissance requise actuelle lorsque la première puissance maximale disponible est inférieure à la puissance de demande maximale, afin de garantir que la première puissance maximale disponible est supérieure ou égale à une somme des premières limites de puissance des dispositifs de charge cibles.

5. Procédé de contrôle de puissance pour une station de charge, appliqué dans chaque dispositif de charge cible de la station de charge, le dispositif de charge cible étant un dispositif de charge ayant une demande de sortie de puissance dans la station de charge, la station de charge comprenant un système de stockage d'énergie et étant connectée à un système de réseau électrique, le procédé de contrôle de puissance comprenant :

S100 : diffuser une demande de puissance actuelle de chaque dispositif de charge cible ;

S200 : recevoir une première puissance maximale disponible de la station de charge diffusée par un contrôleur intégré de la station de charge et une première limite de puissance de chaque dispositif de charge cible, et effectuer une sortie de puissance sur la base de la première limite de puissance, la première puissance maximale disponible de la station de charge et la première limite de puissance de chaque dispositif de charge cible étant calculées et déterminées par le contrôleur intégré sur la base d'un paramètre de capacité d'alimentation acquis diffusé par le système de stockage d'énergie, d'un paramètre de capacité d'alimentation acquis diffusé par le système de réseau électrique, de la demande de puissance actuelle diffusée par chaque dispositif de charge cible et d'une règle d'allocation prédéfinie ;

S300 : acquérir en temps réel un paramètre de capacité d'alimentation actuel diffusé par le système de stockage d'énergie et un paramètre de capacité d'alimentation actuel diffusé par le système de réseau électrique ;

S400 : déterminer si une chute soudaine de la capacité d'alimentation se produit sur la base de la première puissance maximale disponible de la station de charge, du paramètre de capacité d'alimentation actuellement acquis diffusé par le système de stockage d'énergie et du paramètre de capacité d'alimentation actuellement acquis diffusé par le système de réseau électrique, **caractérisé en ce que** la première puissance maximale disponible est calculée comme APmax=GPmax+EPmax-RP, où APmax représente la première puissance maximale disponible, GPmax représente une puissance maximale disponible du système de réseau électrique, EPmax représente une puissance maximale disponible du système de stockage d'énergie et RP représente une puissance réservée prédéfinie ; ou la première puissance maximale disponible est calculée comme APmax=Pc* (GPmax+EPmax), où APmax représente la première puissance maximale disponible, GPmax représente une puissance maximale disponible du système de réseau électrique, EPmax représente une puissance maximale disponible du système de stockage d'énergie et Pc représente un coefficient de puissance, où 0 < Pc <1 ; et

S500 : réduire la limite de puissance de chaque dispositif de charge cible à une deuxième limite de puissance lorsque la chute soudaine de la capacité d'alimentation se produit, afin d'éviter une surcharge du réseau électrique de la station de charge.

6. Procédé de contrôle de puissance selon la revendication 5, dans lequel ladite détermination de si une chute soudaine de la capacité d'alimentation se produit sur la base de la première puissance maximale disponible de la station de charge, du paramètre de capacité d'alimentation actuellement acquis diffusé par le système de stockage d'énergie et du paramètre de capacité d'alimentation actuellement acquis diffusé par le système de réseau électrique comprend :

calculer une deuxième puissance maximale disponible de la station de charge sur la base du paramètre de capacité d'alimentation actuellement acquis diffusé par le système de stockage d'énergie et du paramètre de capacité d'alimentation actuellement acquis diffusé par le système de réseau électrique ; et

déterminer que la chute soudaine de la capacité d'alimentation se produit lorsque la deuxième puissance maximale disponible est inférieure à la première puissance maximale disponible.

7. Procédé de contrôle de puissance selon la revendication 5, comprenant en outre, après la réduction de la limite de puissance de chaque dispositif de charge cible à la deuxième limite de puissance :

calculer une dernière deuxième puissance maximale disponible de la station de charge sur la base d'un dernier paramètre de capacité d'alimentation acquis diffusé par le système de stockage d'énergie et d'un dernier paramètre de capacité d'alimentation acquis diffusé par le système de réseau électrique, et recevoir une dernière première puissance maximale disponible de la station de charge diffusée par le contrôleur intégré de la station de charge et une dernière première limite de puissance de chaque dispositif de charge cible ; et

effectuer la sortie de puissance sur la base de la dernière première limite de puissance reçue correspondant à chaque dispositif de charge cible lorsque la dernière première puissance maximale disponible diffusée est inférieure ou égale à la dernière deuxième puissance maximale disponible.

8. Procédé de contrôle de puissance selon la revendication 6 ou 7, dans lequel la deuxième puissance maximale disponible est calculée comme SPmax=GPmax+EPmax-RP,

où SPmax représente la deuxième puissance maximale disponible de la station de charge, GPmax représente une puissance maximale disponible du système de réseau électrique, EPmax représente une puissance maximale disponible du système de stockage d'énergie et RP représente une puissance réservée prédéfinie.

9. Procédé de contrôle de puissance selon la revendication 6 ou 7, dans lequel la deuxième puissance maximale disponible est calculée comme SPmax=Pc*(GPmax+EPmax),

où SPmax représente la deuxième puissance maximale disponible de la station de charge, GPmax représente une puissance maximale disponible du système de réseau électrique, EPmax représente une puissance maximale disponible du système de stockage d'énergie et Pc représente un coefficient de puissance, où $0 < Pc \leq 1$.

10. Procédé de contrôle de puissance selon la revendication 6, dans lequel la deuxième limite de puissance est égale à une différence entre la première puissance maximale disponible et la deuxième puissance maximale disponible.

11. Appareil de contrôle de puissance d'une station de charge, appliqué dans un contrôleur intégré de la station de charge, l'appareil de contrôle de puissance comprenant :

une mémoire ayant un programme de contrôle stocké dans celle-ci ; et
un processeur,
dans lequel le programme de contrôle est configuré pour, lorsqu'il est exécuté par le processeur, mettre en œuvre le procédé de contrôle de puissance selon l'une quelconque des revendications 1 à 4.

12. Appareil de contrôle de puissance d'une station de charge, appliqué dans chaque dispositif de charge cible de la station de charge, l'appareil de contrôle de puissance comprenant :

une mémoire ayant un programme de contrôle stocké dans celle-ci ; et
un processeur,
dans lequel le programme de contrôle est configuré pour, lorsqu'il est exécuté par le processeur, mettre en œuvre le procédé de contrôle de puissance selon l'une quelconque des revendications 5 à 10.

13. Système de contrôle de puissance d'une station de charge, le système de contrôle de puissance comprenant l'appareil de contrôle de puissance selon la revendication 11 et l'appareil de contrôle de puissance selon la revendication 12.

Acquiring a power supply capability parameter broadcasted by the energy storage system, a power supply capability parameter broadcasted by the power grid system, and a current power demand broadcasted by each target charging device

— S10

Calculating a first maximum available power of the charging station based on the power supply capability parameter of the energy storage system and the power supply capability parameter of the energy storage system the power grid system

— S20

Determining a first power limit of each target charging device based on the first maximum available power of the charging station, the current power demand broadcasted by each target charging device, and a predetermined allocation rule

— S30

Broadcasting the first maximum available power of the charging station and the first power limit of each target charging device to each target charging device

— S40

FIG. 1

S10

Acquiring a power supply capability parameter broadcasted by the energy storage system, a power supply capability parameter broadcasted by the power grid system, and a current power demand broadcasted by each target charging device

S20

Calculating a first maximum available power of the charging station based on the power supply capability parameter of the energy storage system and the power supply capability parameter of the power grid system

S31

Calculating a maximum request power based on a current required power broadcasted by each target charging device

S32

Whether the first maximum available power is greater than or equal to the maximum request power

N

Y

S33

Determining the current required power of each target charging device as the respective first power limit

S34

Determining the first power limit based on a power priority level of each target charging device and the current required power

S40

Broadcasting the first maximum available power of the charging station and the first power limit of each target charging device to each target charging device

S50

Re-determining the first power limit of each target charging device

S60

Broadcasting the currently calculated first maximum available power and the re-determined first power limit of each target charging device to each target charging device

FIG. 2

S100

Broadcasting a current power demand of the target charging device

S200

Receiving a first maximum available power of the charging station broadcasted by an integrated controller of the charging station and a first power limit of each target charging device, and performing power output based on the first power limit

S300

Acquiring a current power supply capability parameter broadcasted by the energy storage system and a current power supply capability parameter broadcasted by the power grid system in real time

S400

Determining whether a sudden drop in a power supply capability occurs

N

Y

S500

Reducing the power limit of each target charging device to a second power limit

S600

The target device remains output based on the first power limit

FIG. 3

EP 4 333 259 B1

Broadcasting a current power demand of the target
charging device — S100

Receiving a first maximum available power of the charging
station broadcasted by an integrated controller of the
charging station and a first power limit of each target
charging device, and performing power output based on the
first power limit — S200

Acquiring a current power supply capability parameter
broadcasted by the energy storage system and the power grid
system in real time — S300

Determining whether a sudden
drop in a power supply
capability occurs — S400   N

Y

Reducing the power limit of each target
charging device to a second power limit — S500

The target device keeps performing the output
based on the first power limit — S600

Calculating a latest second maximum available power of the
charging station based on a latest acquired power supply
capability parameter broadcasted by the energy storage system
and a latest acquired power supply capability parameter
broadcasted by the power grid system, and receiving a latest first
maximum available power of the charging station broadcasted by
the integrated controller of the charging station and a latest first
power limit of each target charging device — S700

Whether the latest broadcasted first
maximum available power is smaller
than or equal to the latest second
maximum available power — S800

N

Y

Reducing the power limit of each target
charging device to a second power limit — S900

FIG. 4

22

| Integrated controller | Energy storage system | Power grid system | Target charging device |
|---|---|---|---|

At block S304, a power supply capability parameter broadcasted by the energy storage system, a power supply capability parameter broadcasted by the power grid system, and a current power demand of each target charging device are acquired

Calculating and broadcasting a power supply capability of the energy storage system

Calculating and broadcasting a power supply capability of the power grid system

At block S302, calculating and broadcasting its own power demand

At block S304, a first maximum available power of the charging station is calculated based on the power supply capability parameter of the energy storage system and the power supply capability parameter of the power grid system

At block S308, a first power limit of each target charging device and a limit output power of the energy storage system are determined based on the first maximum available power of the charging station, the current power demand broadcasted by each target charging device, and a predetermined allocation rule

At block S310, the first maximum available power of the charging station and the first power limit of each target charging device are broadcasted to each target charging device

Performing power output based on the limit output power of the energy storage system

At block S312, the first maximum available power of the charging station broadcasted by the integrated controller of the charging station and the first power limit of each target charging device are received by the target charging device, and the power output is performed based on its own corresponding first power limit

At block S314, the first maximum available power of the charging station, the first power limit of each target charging device and the limit output power of the energy storage system are continuously calculated and broadcasted

Continuously broadcasting a current output state and an output capability

Continuously broadcasting current power consumption and demand

At block S316, whether a sudden drop in a power supply capability occurs is determined based on the first maximum available power of the charging station, a currently collected power supply capability parameter broadcasted by the energy storage system, and a currently collected power supply capability parameter broadcasted by the power grid system; and a power limit of the target charging device is reduced to a second power limit when the sudden drop in the power supply capability occurs

At block S318, after determining that the integrated controller has re-completed quota calculation based on the power supply capacity, the active derating is cancelled and power output is performed based on the latest received first power limit corresponding to itself

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2013009599 A